(19) Europäisches Patentamt
European Patent Office
Office européen des brevets

(11) EP 4 339 238 A1

(12) EUROPEAN PATENT APPLICATION

(43) Date of publication:
**20.03.2024 Bulletin 2024/12**

(21) Application number: **23196579.9**

(22) Date of filing: **11.09.2023**

(51) International Patent Classification (IPC):
***C08L 23/08*** *(2006.01)*

(52) Cooperative Patent Classification (CPC):
(C-Sets available)
**C08L 23/0853; C08F 210/02;** C08K 2003/262;
C08L 2203/14 (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.09.2022 EP 22195741**

(71) Applicant: **Sika Technology AG**
**6340 Baar (CH)**

(72) Inventors:
- **HAYASHI, Yuki**
  **Fukuoka 811-2201 (JP)**
- **RIBOT, Cendrine**
  **8953 Dietikon (CH)**

(74) Representative: **Sika Patent Attorneys**
**c/o Sika Technology AG**
**Corp. IP Dept.**
**Tüffenwies 16**
**Postfach**
**8048 Zürich (CH)**

# (54) THERMALLY EXPANDABLE COMPOSITION HAVING REDUCED ODOR IN EXPANDED STATE

(57) The invention is directed to a thermally expandable composition comprising a polymer component P comprising at least one epoxy-functional polymer EP, at least one acid anhydride-functional polymer AP, optionally at least one thermoplastic polymer TP, and at least one blowing agent BA comprising sodium bicarbonate. The invention is also related to use of sodium bicarbonate in a thermally expandable material to reduce odor of the expanded material.

EP 4 339 238 A1

(52) Cooperative Patent Classification (CPC): (Cont.)

C-Sets
**C08L 23/0853, C08L 23/0853, C08L 23/0884,**
**C08L 23/0869, C08L 23/0869, C08K 3/26;**
**C08L 23/0853, C08L 23/0884, C08L 23/0869,**
**C08K 3/26**

## Description

### Technical field

The present invention relates to thermally expandable compositions and use thereof for providing baffle and/or reinforcement elements. Such elements are particularly suitable for use in sealing, baffling, and/or reinforcing of hollow structures, for example cavities in a hollow structural part of an automotive vehicle.

### Background of the invention

Manufactured products often contain orifices and cavities or other hollow parts that result from the manufacturing process and/or that are designed into the product for various purposes, such as weight reduction. Automotive vehicles, for example, include several such orifices and cavities throughout the vehicle, including those in the vehicle's structural pillars and in the sheet metal of the vehicle doors. It is often desirable to seal such orifices and cavities so as to minimize noise, vibrations, fumes, dirt, water, humidity, and the like from passing from one area to another within the vehicle by means of sealing members or baffle elements built into the orifice or cavity. Likewise, such members or elements often fulfil an additional task of reinforcing the hollow structure of the manufactured product, for example an automotive part, so much that it becomes more resistant to mechanical stress but still maintains the low weight advantage of the hollow structure.

Such elements used for sealing, baffling or reinforcing often consist of a carrier, made of plastic, metal, or another rigid material, and one or more layers of a thermoplastic material attached to it which is able to expand its volume when heat or another physical or chemical form of energy is applied, but they can also be entirely made of expandable material. Using an adequate design, it is possible to insert the baffle or reinforcement element into the hollow part of the structure during the manufacturing process but also to leave the inner walls of the structure still accessible (or the cavities passable) by for example a liquid. For example, during the manufacture process of a vehicle, the hollow parts of a metal frame can still be largely covered by an electro-coating ("e-coat") liquid while the baffle or reinforcement elements are already inserted, and afterwards during a heat treatment step, the expandable thermoplastic material of the baffle or reinforcement element expands to fill the cavities as intended.

The development of such baffles or reinforcement elements has led to highly advanced systems, where the expandable material is able to increase its volume by up to several hundred percent, forming a stable, cross-linked foam-like structure that fills the cavities and adhering to the walls of the structure intended to be sealed, baffled, or reinforced. Especially in automotive manufacturing, this has led to considerable weight reduction and excellent dampening of noise or vibrations in the car body.

Currently employed thermally expandable compositions often consist of polymers such as ethylene-vinyl acetate polymers that can be cross-linked by radical initiators, most commonly peroxides. In order to obtain foams, these compositions furthermore contain blowing agents, the most widely used being azodicarbonamide (also called azodicarboxamide or azobisformamide) and 4,4'-oxydibenzenesulfonyl hydrazide (abbreviated OBSH). Under activation conditions, such as elevated temperature, curing of the cross-linkable network takes place, while simultaneously the blowing agent decomposes and releases gases. This leads to the above mentioned volume expansion and the formation of a stable foam, which in ideal cases fills the cavity as intended and adheres to its walls. Such a system is for example disclosed in DE 10 2011 080 223 A1.

Thermally expandable compositions crosslinked by acrylates and peroxide using azodicarbonamide as a blowing agent can have the disadvantage of odor formation since azodicarbonamide is potential emitter of ammonia when exposed to higher temperature. Especially in the automotive industry, many manufacturers rely on the test method VDA270 to determine the odor of materials used and demand for low-odor materials.

It is thus desirable to obtain a thermally expandable composition that does not suffer from these limitations and leads to low odor formation and low ammonia emission during and after the foaming process.

### Summary of the invention

The object of the present invention is to provide a storage-stable thermally expandable composition having a low odor formation during and/or after expansion of the material.

The subject of the present invention is a thermally expandable composition as defined in claim 1.

It was surprisingly found out that by using sodium bicarbonate as a blowing agent, the odor formation during and/or after expansion of the material can be significantly reduced.

The thermally expandable composition according to the present invention is particularly suitable to be used in sealing, baffling or reinforcing element, for example in automotive applications.

Other subjects of the present invention are presented in other independent claims. Preferred aspects of the

invention are presented in the dependent claims.

**Detailed description of the invention**

The subject of the present invention is a thermally expandable composition comprising:

a) A polymer component **P** comprising:

a1) At least one epoxy-functional polymer **EP**,
a2) At least one acid anhydride-functional polymer **AP**, and
a3) Optionally at least one thermoplastic polymer **TP**, and

b) At least one blowing agent **BA** comprising sodium bicarbonate,

wherein the thermally expandable composition comprises at least 2.5 wt.-% , preferably at least 5 wt.-%, more preferably at least 7.5 wt.-%, even more preferably at least 10 wt.-%, based on the total weight of the composition, of sodium bicarbonate.

Substance names beginning with "poly" designate substances which formally contain, per molecule, two or more of the functional groups occurring in their names. For instance, a polyol refers to a compound having at least two hydroxyl groups. A polyether refers to a compound having at least two ether groups.

The term "polymer" refers to a collective of chemically uniform macromolecules produced by a polyreaction (polymerization, polyaddition, polycondensation) where the macromolecules differ with respect to their degree of polymerization, molecular weight and chain length. The term also comprises derivatives of said collective of macromolecules resulting from polyreactions, that is, compounds which are obtained by reactions such as, for example, additions or substitutions, of functional groups in predetermined macromolecules and which may be chemically uniform or chemically non-uniform.

The term "molecular weight" refers to the molar mass (g/mol) of a molecule or a part of a molecule, also referred to as "moiety". The term "average molecular weight" refers to number average molecular weight ($M_n$) of an oligomeric or polymeric mixture of molecules or moieties. The molecular weight may be determined by conventional methods, preferably by gel permeation-chromatography (GPC) using polystyrene as standard, styrenedivinylbenzene gel with porosity of 100 Angstrom, 1000 Angstrom and 10000 Angstrom as the column and tetrahydrofurane as a solvent, at 35°C.

The term "melting temperature" refers to a temperature at which a material undergoes transition from the solid to the liquid state. The melting temperature ($T_m$) is preferably determined by differential scanning calorimetry (DSC) according to ISO 11357-3 standard using a heating rate of 2 °C/min. The measurements can be performed with a Mettler Toledo DSC 3+ device and the $T_m$ values can be determined from the measured DSC-curve with the help of the DSC-software. In case the measured DSC-curve shows several peak temperatures, the first peak temperature coming from the lower temperature side in the thermogram is taken as the melting temperature ($T_m$).

The "amount or content of at least one component X" in a composition, for example "the amount of the at least one thermoplastic polymer P" refers to the sum of the individual amounts of all thermoplastic polymers P contained in the composition. For example, in case the at least one thermoplastic polymer P comprises 20 wt.-% of the total weight of the composition, the sum of the amounts of all thermoplastic polymers P contained in the composition equals 20 wt.-%.

According to one or more preferred embodiments, the thermally expandable composition comprises 5-30 wt.-%, preferably 5 - 25 wt.-%, more preferably 10 - 20 wt.-%, more preferably 12.5 - 20 wt.-%, based on the total weight of the composition, of sodium bicarbonate.

Preferably, the sodium bicarbonate has a median particle size $d_{50}$ of not more than 150 μm, preferably not more than 100 μm, more preferably not more than 85 μm, even more preferably not more than 75 μm.

The term "particle size" refers in the present disclosure to the area-equivalent spherical diameter of a particle ($X_{area}$). The term "median particle size $d_{50}$" refers in the present disclosure to a particle size below which 50% of all particles by volume are smaller than the $d_{50}$ value. The particle size distribution can be determined, for example, by sieve analysis according to the method as described in ASTM C136/C136M -2014 standard ("Standard Test Method for Sieve Analysis of Fine and Coarse Aggregates).

According to one or more embodiments, the sodium bicarbonate has a median particle size $d_{50}$ of 1 - 150 μm, preferably 1.5 - 100 μm, more preferably 2.5 - 85 μm, even more preferably 2.5 - 75 μm. Preferably, the sodium bicarbonate has a median particle size $d_{50}$ of 2.5 - 100 μm, more preferably 7.5 - 75 μm, even more preferably 10 - 50 μm, still more preferably 12.5 - 40 μm. Especially preferably, the sodium bicarbonate has a median particle size $d_{50}$ of 10 - 45 μm, more preferably 15 - 40 μm, still more preferably 17.5 - 35 μm.

Thermally expandable compositions containing sodium bicarbonate having a particle size falling within the above cited ranges have been found out to exhibit especially low odor after the foaming process, i.e., after activation of

the blowing agent. The odor of a composition can be determined, for example, as a sensory impression of smell measured according to VDA270 standard ("Determination of the odor behavior of automotive interior materials").

According to one or more embodiments, the thermally expandable composition is essentially free of organic peroxides, preferably essentially free of peroxides. The expression "essentially free of peroxides" is understood to mean that the thermally expandable composition may contain only traces of peroxides, such as less than 0.25 wt.-%, preferably less than 0.1 wt.-%, more preferably less than 0.01 wt.-%, based on the total weight of the thermally expandable composition.

According to one or more further embodiments, the thermally expandable composition is essentially free of free-radical cross-linkers. The expression "essentially free of free-radical cross-linkers" is understood to mean that the amount of such substances, which are able to cross-link polymers by free-radical curing mechanism is preferably less than 0.25 wt.-%, more preferably less than 0.1 wt.-%, even more preferably less than 0.05 wt.-%, based on the total weight of the thermally expandable composition.

It may further be preferred that the thermally expandable composition is essentially free of ADCA (azodicarbonamide) and OBSH (4,4'-oxybis(benzenesulfonic acid hydrazide)), preferably essentially free of exothermic blowing agents, in particular ADCA, OBSH, DNPT (dinitroso pentamethylene tetramine), PTSS (p-toluenesulfonyl semicarbazide), BSH (benzene-4-sulfonyl hydrazide), TSH (4-toluenesulfonyl hydrazide), and 5-PT (5-phenyltetrazole). The expression "essentially free of" is understood to mean that the thermally expandable composition may contain only traces of the above listed compounds, such as less than 0.25 wt.-%, preferably less than 0.1 wt.-%, more preferably less than 0.05 wt.-%, based on the total weight of the thermally expandable composition.

Preferably, the thermally expandable composition comprises at least 35 wt.-%, more preferably at least 45 wt.-%, even more preferably at least 55 wt.-%, still more preferably at least 60 wt.-%, most preferably at least 65 wt.-%, based on the total weight of the thermally expandable composition, of the polymer component **P**.

According to one or more embodiments, the thermally expandable composition comprises 35 - 95 wt.-%, preferably 45 - 90 wt.-%, more preferably 50 - 90 wt.-%, even more preferably 55 - 85 wt.-%, still more preferably 60 - 85 wt.-%, most preferably 65 - 85 wt.-%, based on the total weight of the thermally expandable composition, of the polymer component **P**.

The polymer component **P** comprises:

a1) At least one epoxy-functional polymer **EP**,
a2) At least one acid anhydride-functional polymer **AP**, and
a3) Optionally at least one thermoplastic polymer **TP**, and

According to one or more embodiments, the sum of the weights of the at least one polymer **EP**, **AP**, and **TP** makes up at least 75 wt.-%, preferably at least 85 wt.-%, more preferably at least 95 wt.-%, of the total weight of the polymer component **P**.

According to one or more embodiments, the molar ratio of the total amount of epoxy groups contained in the at least one polymer **EP** to the total amount of acid anhydride groups contained in the at least one polymer **AP** in the thermally expandable composition is in the range of from 3:1 to 1:3, preferably 2:1 to 1:2, more preferably1.5:1 to 1:1.5, even more preferably from 1.2:1 to 1:1.2.

<u>Epoxy functional polymer EP</u>

The polymer component **P** of the thermally expandable composition comprises at least one epoxy-functional polymer **EP**.

Preferably, the at least one epoxy-functional polymer **EP** has an average of more than one epoxy group per molecule. Furthermore, the at least one epoxy-functional polymer **EP** may contain either polymerized or grafted epoxy functionality, i.e., the epoxide moieties may be present as part of a polymer backbone or grafted onto a polymer as a side chain.

Suitable epoxy-functional polymers to be used as the at least one epoxy-functional polymer **EP** include, for example, olefin glycidyl (meth)acrylate copolymers, olefin alkyl (meth)acrylate glycidyl (meth)acrylate terpolymers, glycidyl methacrylate grafted (co)polymers, epoxy resins, and epoxy-functionalized polyurethane polymers. The term "(meth)acrylate" designates in the present disclosure both acrylate and methacrylate.

According to one or more embodiments, the at least one epoxy-functional polymer **EP** is selected from olefin glycidyl (meth)acrylate copolymer, olefin alkyl acrylate glycidyl (meth)acrylate terpolymer, and glycidyl (meth)acrylate grafted (co)polymer.

Suitable olefin glycidyl (meth)acrylate copolymers to be used as the at least one epoxy-functional polymer **EP** include, for example, copolymers of ethylene, propylene, or butylene with glycidyl acrylate (GA) or with glycidyl (meth)acrylate (GMA).

According to one or more embodiments, the at least one epoxy-functional polymer **EP** comprises at least one olefin glycidyl (meth)acrylate copolymer **EP1**, preferably selected from the group consisting of ethylene glycidyl (meth)acrylate copolymers, propylene glycidyl (meth)acrylate copolymers, and butylene glycidyl (meth)acrylate copolymers, more preferably from the group consisting of ethylene glycidyl (meth)acrylate copolymers, in particular ethylene glycidyl methacrylate copolymers.

Generally, the expression "the at least one component X comprises at least one component XN", such as "the at least one epoxy-functional polymer **EP** comprises at least one olefin glycidyl (meth)acrylate copolymer **EP1**" is understood to mean in the context of the present disclosure that the thermally expandable composition comprises one or more olefin glycidyl (meth)acrylate copolymers **EP1** as representatives of the at least one epoxy-functional polymer **EP**.

According to one or more embodiments, the at least one olefin glycidyl (meth)acrylate copolymer **EP1** has:

- a content of glycidyl methacrylate of 1 - 50 wt.-%, more preferably 2-25 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85- 135 °C, more preferably 90 - 125 °C.

According to one or more embodiments, the at least one epoxy-functional polymer **EP** is composed of the at least one olefin glycidyl (meth)acrylate copolymer **EP1**, preferably selected from the group consisting of ethylene glycidyl (meth)acrylate copolymers, propylene glycidyl (meth)acrylate copolymers, and butylene glycidyl (meth)acrylate copolymers, more preferably from the group consisting of ethylene glycidyl (meth)acrylate copolymers, in particular ethylene glycidyl methacrylate copolymers.

Suitable olefin alkyl (meth)acrylate glycidyl (meth)acrylate terpolymers to be used as the at least one epoxy-functional polymer **EP** include, for example, terpolymers, in particular random terpolymers, of ethylene and alkyl (meth)acrylate with glycidyl acrylate (GA) or with glycidyl methacrylate (GMA), wherein the alkyl group of the alkyl (meth)acrylate is preferably selected from the group consisting of methylene, ethylene, propylene, and butylene, in particular methylene or butylene.

Preferred olefin alkyl (meth)acrylate glycidyl (meth)acrylate terpolymers include ethylene methyl acrylate glycidyl acrylate terpolymers (E/MA/GA), ethylene ethyl acrylate glycidyl acrylate terpolymers (E/EA/GA), ethylene propyl acrylate glycidyl acrylate terpolymers (E/PA/GA), ethylene butyl acrylate glycidyl acrylate terpolymers (E/BA/GA), ethylene methyl methacrylate glycidyl acrylate terpolymers (E/MMA/GA), ethylene ethyl methacrylate glycidyl acrylate terpolymers (E/EMA/GA), ethylene propyl methacrylate glycidyl acrylate terpolymers (E/PMA/GA), ethylene butyl methacrylate glycidyl acrylate terpolymers (E/BMA/GA), ethylene methyl acrylate glycidyl methacrylate terpolymers (E/MA/GMA), ethylene ethyl acrylate glycidyl methacrylate terpolymers (E/EA/GMA), ethylene propyl acrylate glycidyl methacrylate terpolymers (E/PA/GMA), ethylene butyl acrylate glycidyl methacrylate terpolymers (E/BA/GMA), ethylene methyl methacrylate glycidyl methacrylate terpolymers (E/MMA/GMA), ethylene ethyl methacrylate glycidyl methacrylate terpolymers (E/EMA/GMA), ethylene propyl methacrylate glycidyl methacrylate terpolymers (E/PMA/GMA), ethylene butyl methacrylate glycidyl methacrylate terpolymers (E/BMA/GMA).

According to one or more embodiments, the at least one epoxy-functional polymer **EP** comprises at least one olefin alkyl acrylate glycidyl (meth)acrylate terpolymer **EP2**, preferably selected from the group consisting of random terpolymers of ethylene, alkyl (meth)acrylate, and glycidyl methacrylate, wherein the alkyl group of the alkyl (meth)acrylate is preferably selected from the group consisting of methylene, ethylene, propylene, and butylene, in particular methylene or butylene.

According to one or more embodiments, the at least one olefin alkyl acrylate glycidyl (meth)acrylate terpolymer **EP2** has:

- a content of glycidyl methacrylate of 1 - 50 wt.-%, more preferably 2-25 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85 - 135 °C, more preferably 90 - 125 °C.

According to one or more embodiments, the at least one epoxy-functional polymer **EP** is composed of the at least one olefin alkyl acrylate glycidyl (meth)acrylate terpolymer **EP2**, preferably selected from the group consisting of random terpolymers of ethylene, alkyl (meth)acrylate, and glycidyl methacrylate, wherein the alkyl group of the alkyl (meth)acrylate is preferably selected from the group consisting of methylene, ethylene, propylene, and butylene, in

particular methylene or butylene.

Suitable glycidyl (meth)acrylate grafted (co)polymers to be used as the at least one epoxy-functional polymer **EP** include, for example, glycidyl methacrylate grafted olefin vinyl acetate copolymers, glycidyl methacrylate grafted ethylene-a-olefin copolymers, glycidyl methacrylate grafted propylene-α-olefin copolymers, glycidyl methacrylate grafted polyethylene, glycidyl methacrylate grafted polypropylene, and glycidyl methacrylate grafted olefin copolymer elastomers, glycidyl (meth)acrylate grafted styrene butadiene copolymers, and glycidyl (meth)acrylate grafted styrene ethylene butylene styrene terpolymers.

According to one or more embodiments, the at least one epoxy-functional polymer **EP** comprises at least one glycidyl methacrylate grafted (co)polymer **EP3**, preferably selected from the group consisting of glycidyl methacrylate grafted olefin vinyl acetate copolymers, glycidyl methacrylate grafted ethylene-a-olefin copolymers, glycidyl methacrylate grafted propylene-α-olefin copolymers, glycidyl methacrylate grafted polyethylene, glycidyl methacrylate grafted polypropylene, glycidyl (meth)acrylate grafted styrene butadiene copolymers, and glycidyl (meth)acrylate grafted styrene ethylene butylene styrene terpolymers.

According to one or more embodiments, the at least one glycidyl methacrylate grafted (co)polymer **EP3** has:

- a content of glycidyl methacrylate (GMA) of 0.1 - 10 wt.-%, preferably 0.1 - 5 wt.-%, more preferably 0.1 - 3.5 wt.-%, even more preferably 0.1 - 2.5 wt.-%, in particular 0.1 - 1.5 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85- 135 °C, more preferably 90 - 125 °C.

According to one or more embodiments, the at least one epoxy-functional polymer **EP** is composed of the at least one glycidyl methacrylate grafted (co)polymer **EP3**, preferably selected from the group consisting of glycidyl methacrylate grafted olefin vinyl acetate copolymers, glycidyl methacrylate grafted ethylene-a-olefin copolymers, glycidyl methacrylate grafted propylene-α-olefin copolymers, glycidyl methacrylate grafted polyethylene, glycidyl methacrylate grafted polypropylene, glycidyl (meth)acrylate grafted styrene butadiene copolymers, and glycidyl (meth)acrylate grafted styrene ethylene butylene styrene terpolymers.

Suitable epoxy resins to be used as the at least one epoxy-functional polymer **EP** include solid and liquid epoxy resins having an average of more than one epoxy group per molecule and mixtures of these. The term "solid epoxy resin" designates epoxy resins having a glass transition temperature above the normal room temperature.

Suitable solid epoxy resins include those of the formula (V).

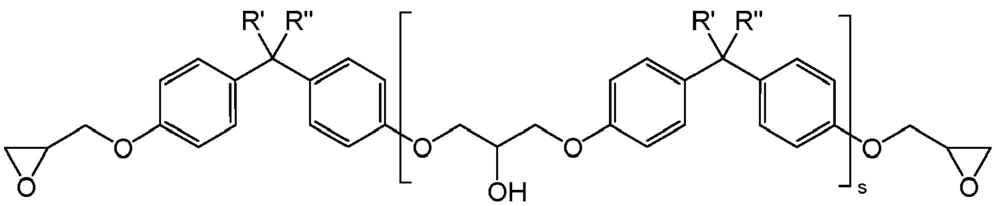

(I)

wherein the substituents R' and R" represent independently from one another either a hydrogen atom or a methyl group and the index s has a value of ≥ 1, preferably of ≥ 1.5, more preferably of 2 to 12.

Compounds of the formula (I) having an index s in the range from greater than 1 to 1.5 are known to a person skilled in the art as semisolid epoxy resins. For the purposes of the present disclosure, these are likewise considered to be solid epoxy resins.

Suitable solid epoxy resins are commercially available, for example, from Dow Chemical Company, from Huntsman International LLC, from Hexion Specialty Chemicals Inc., and from Olin Corporation.

Suitable liquid epoxy resins which, in particular, can be used together with solid epoxy resins of formula (I), include those of formula (VI)

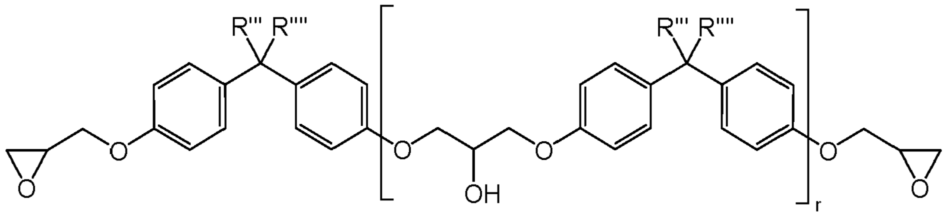

(II)

wherein the substituents R''' and R'''' represent independent from one another either a hydrogen atom or a methyl group and the index r has a value of 0 to 1, preferably a value of 0 to less than 0.2.

Preferred liquid epoxy resins are thus diglycidyl ethers of bisphenol A (DGEBA), of bisphenol F and of bisphenol A/F (the expression 'A/F' refers here to a mixture of acetone with formaldehyde which is used as a reactant in the preparation thereof).

Suitable liquid epoxy resins are commercially available, for example, under the trade names of Araldite® GY 250, Araldite® PY 304, and Araldite® GY 282 (from Huntsman International LLC), and under the trade names of D.E.R.® 331 or D.E.R.® 330 (from Dow Chemical Company), and under the trade names of Epikote® 828 or Epikote® 862 (from Hexion Specialty Chemicals Inc.).

Further suitable solid epoxy resins are so-called epoxy novolac resins. Preferred epoxy novolac resins include those of formula (VII)

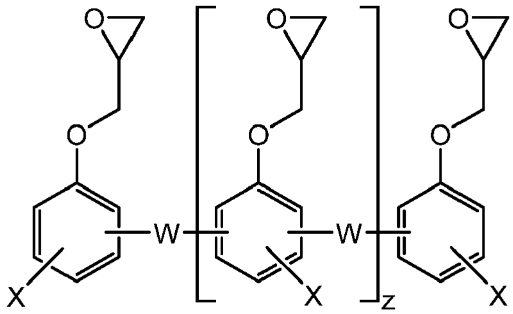

(III)

wherein X represents a hydrogen atom or a methyl group and W represents $-CH_2-$ or a moiety of the formula (IV)

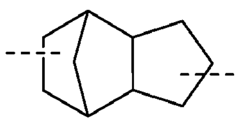

(IV)

Preferably, index z has a value of 0 to 7, in particular a value of ≥ 3. In particular, these are phenol or cresol novolacs (W represents $-CH_2-$).

Such epoxy novolac resins are commercially available, for example, under the trade names of EPN®, ECN®, and Tactix® 556 (from Huntsman International LLC) and under the trade name of D.E.N® (from Dow Chemical Company).

According to one or more embodiments, the at least one epoxy-functional polymer **EP** comprises or is composed of at least one epoxy resin **EP4**, preferably selected from the group consisting of solid epoxy resin of formula (V), solid epoxy resin of formula (VII), and mixtures of solid epoxy resin of formula (V) and/or (VII) with liquid epoxy resin of formula (VI). The thermally expandable compositions according to these embodiments are particularly suitable for use as structural foams, in particular for use in reinforcing of hollow structures.

Further suitable epoxy resins to be used as the at least one epoxy-functional polymer **EP** include epoxy-functional polyurethane polymers of formula (V)

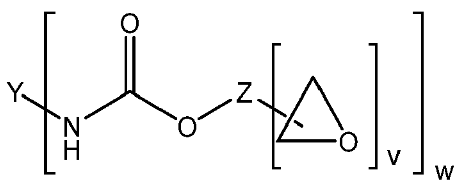

(V)

wherein Y represents a w-valent radical of a linear or branched isocyanate-functional polyurethane polymer **PU** after the removal of the w terminal isocyanate groups:

Z represents a (1+v)-valent radical of an aliphatic, cycloaliphatic, aromatic or aral aliphatic epoxide containing a primary or secondary hydroxyl group after the removal of the hydroxyl group and v epoxide groups;
v represents an integer having a value of 1, 2, or 3, preferably 2;
and w represents an integer having a value from 2 to 4.

The linear or branched isocyanate-functional polyurethane polymer **PU** has preferably a structure according to formula (VI)

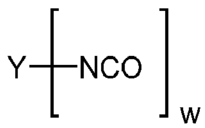

(VI)

wherein Y and w have the same meaning as described above.

The isocyanate-functional polyurethane polymer **PU**, represented in formula (VI), may be obtained from the reaction of at least one polyisocyanate, preferably diisocyanate or triisocyanate, with at least one polyol, wherein the isocyanate groups are in stoichiometric excess over hydroxyl groups. The reaction can be carried out via known methods, preferably at temperatures of between 50 and 150 °C, optionally in the presence of a catalyst.

Suitable polyols for the production of isocyanate-functional polyurethane polymer **PU** include, for example, polyoxyalkylene polyols, also referred to as polyether polyols, which are the polymerization product of ethylene oxide, 1,2-propylene oxide, 1,2- or 2,3-butylene oxide, tetrahydrofuran or mixtures thereof, optionally polymerized by means of a starter molecule with two or three active H atoms such as water or compounds with two or three OH groups, for example ethylene glycol or glycerol.

Preferred polyether polyols are polymerization products of ethylene oxide, 1,2-propylene oxide, 1,2- or 2,3-butylene oxide, tetrahydrofuran or mixtures thereof, particularly preferable being polypropylene oxides and polytetrahydrofurans. Suitable polytetrahydrofurans are commercially available, for example, from BASH under the trade names of PolyTHF®, for example PolyTHF®2000, PolyTHF®2500 CO, and PolyTHF®3000 CO. Suitable polypropylene oxides are commercially available, for example, from Shell under the trade name of Caradol®, such as Caradol®2000 and Caradol®ED56 and from Bayer under the trade name of Acclaim®, such as Acclaim® Polyol 2200, Acclaim® Polyol 12200, and Acclaim® Polyol 4200. Further suitable polyether polyols are commercially available from Dow Chemicals under the trade names of Voranol®1010L, Voranol® EEP900, and Voranol®CP4755. Especially preferred polyether polyol is polytetrahydrofuran. Preferred polyether polyols have, for example, a weight average molecular weight ($M_w$) in the range from 500 to 5000 g/mol, more preferably 1000 to 3000 g/mol and particularly preferably in the range from 1500 to 2500 g/mol.

The OH-functionality of the polyether polyols used is preferably in the range of approximately 2, for example, in the range from 1.9 to 2.1. Optionally, a compound with an OH functionality of 3, such as, for example, trimethylolpropane, butoxylated trimethylolpropane (for example, Simulsol®TOMB), and/or pentaerythritol can be added to the polyether polyol in order to increase the OH functionality.

Furthermore, suitable polyols include hydroxyl-terminated rubbers. One or more OH-terminated rubbers can be used, wherein the use of two OH-terminated rubbers, in particular two OH-terminated polybutadienes, are preferred. Here, OH-terminated rubbers are understood to refer, for example and preferably, to hydroxyl-terminated polybutadienes and to castor oil-based polyols, wherein hydroxyl-terminated polybutadienes are particularly preferable. Polyols based on castor oil include castor oil of various grades and castor oil derivatives.

Commercially available hydroxyl-terminated polybutadienes are commercially available, for example, from Cray valley under the trade names of Poly bd® and Krasol®, such as Krasol® LBH-P 2000 or Poly bd® R45V; from Evonik under the trade name of Polyvest® HT; from Emerald materials under the trade name of Hypro® 2800X95 HTB. Castor oil-based polyols are commercially available, for example, Alberdingk Boley under the trade name of Albodur®; from Baker Castor Oil Company under the trade name of Polycine®, such as Polycine®-GR80.

The OH-functionality of the hydroxyl-terminated rubbers is preferably in the range from 1.7 to 2.2 for anionically produced types or from 2.2 to 2.8 for types produced by free radical polymerization.

Also suitable as polyols are polyhydroxy-terminated acrylonitrile/butadiene copolymers, for example, the ones prepared using carboxyl-terminated acrylonitrile/butadiene copolymers, such as the ones, which are commercially available from Emerald Materials under the trade names of Hypro® CTBN, as well as the ones prepared using epoxides or amino alcohols.

Furthermore suitable polyols for the production of isocyanate-functional polyurethane polymer **PU** include polyester polyols prepared, for example, from dihydric to trihydric alcohols such as, for example, 1,2-ethanediol, diethylene glycol, 1,2-propanediol, dipropylene glycol, 1,4-butanediol, 1,5-pentanediol, 1,6-hexanediol, neopentylglycol, glycerol, 1,1,1 -trimethylolpropane or mixtures of the aforementioned alcohols, with organic dicarboxylic acids or their anhydrides or esters, such as, for example, succinic acid, glutaric acid, adipic acid, suberic acid, sebacic acid, dodecanedicarboxylic acid, maleic acid, fumaric acid, phthalic acid, isophthalic acid, terephthalic acid, and hexahydrophthalic acid, or mixtures of the aforementioned acids, and also polyester polyols from lactones such as ε-caprolactone.

Suitable as polyols for the production of isocyanate-functional polyurethane polymer **PU** are furthermore polycarbonate polyols of the kind obtainable by reacting, for example, the abovementioned alcohols, i.e. those used to synthesize the polyester polyols, with dialkyl carbonates, diaryl carbonates or phosgene. Also suitable are polyols of the kind obtained by reduction of dimerized fatty acids.

The isocyanate-functional polyurethane polymer **PU** may be obtained by using only one type of polyol. Preferred polyols for these embodiments are polyether polyols, in particular polytetrahydrofuran. It may however be advantageous to use a mixture of different types of polyols for the production of the polyurethane polymer **PU**. According to one or more embodiments, the isocyanate-functional polyurethane polymer **PU** comprises is obtained by using a polyether polyol, in particular polytetrahydrofuran, and a polybutadiene polyol.

Suitable polyisocyanates for the production of the isocyanate-functional polyurethane polymer **PU** include diisocyanates and triisocyanates. Suitable diisocyanates are aliphatic, cycloaliphatic, aromatic or araliphatic diisocyanates, in particular those, which are commercially available, such as methylene diphenyl diisocyanate (MDI), hexamethylene diisocyanate (HDI), toluene diisocyanate (TDI), toluidine diisocyanate (TODI), isophorone diisocyanate (IPDI), trimethyl hexamethylene diisocyanate (TMDI), 2,5- or 2,6-bis(isocyanatomethyl)-bicyclo[2.2.1]heptane, 1,5-naphthalene diisocyanate (NDI), dicyclohexyl methyl diisocyanate (H12MDI), p-phenylene diisocyanate (PPDI), m-tetramethyl xylylene diisocyanate (TMXDI), as well as their dimers, wherein HDI, IPDI, MDI, TDI are preferred. Particularly preferable diisocyanates are aliphatic and cycloaliphatic diisocyanates, for example, HDI, H12MDI and IPDI.

Suitable triisocyanates are trimers or biurets of aliphatic, cycloaliphatic, aromatic or araliphatic diisocyanates, in particular the isocyanurates and biurets of the diisocyanates described above.

The isocyanate-functional polyurethane polymer **PU** is then end-capped with at least one monohydroxyl epoxide compound **E** according to formula (VII)

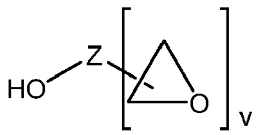

(VII)

wherein Z and v have the same meaning as described above.

The monohydroxyl epoxide compound **E** of formula (VII) is an aliphatic, cycloaliphatic, aromatic, or aral aliphatic epoxide containing one single primary or secondary hydroxyl group and from 1 to 3 epoxide groups.

The monohydroxyl epoxide compounds **E** of formula (VII) can be obtained, for example, by reacting polyols with epichlorohydrin. Depending on the reaction regime, the reaction of polyols with epichlorohydrin produces by-products including the corresponding monohydroxyl epoxide compounds in different concentrations. These can be isolated by routine separation operations.

Generally speaking, however, it is sufficient to use the product mixture obtained in the glycidylization reaction of polyols, comprising fully reacted polyol and polyol which has reacted partially to form the glycidyl ether. Examples of hydroxyl-containing epoxide compounds of this kind are butanediol monoglycidyl ether (contained in butanediol diglycidyl ether), hexanediol monoglycidyl ether (contained in hexanediol diglycidyl ether), cyclohexanedimethanol glycidyl ether, trimethylolpropane diglycidyl ether (contained as a mixture in trimethylolpropane triglycidyl ether), glycerol diglycidyl ether (contained as a mixture in glycerol triglycidyl ether), pentaerythritol triglycidyl ether (contained as a mixture in pentaerythritol tetraglycidyl ether). It is preferred to use trimethylolpropane diglycidyl ether, which occurs at a relatively high fraction in customarily prepared trimethylolpropane triglycidyl ether.

It is, however, also possible to use other, similar hydroxyl-containing epoxides, especially glycidol, 3-glycidyloxybenzyl alcohol or hydroxymethylcyclohexene oxide. Further preference is given to the liquid epoxy resins of formula (VI) as described above.

Preference for end-capping the isocyanate-functional polyurethane polymer **PU** extends to distillation residues which are obtained in the preparation of high-purity, distilled liquid epoxy resins. Distillation residues of this kind have a concentration of hydroxyl-containing epoxides which is up to three times higher than that of commercial undistilled liquid epoxy resins. Such resins are commercially available, for example under the trade name of Epilox® M850 from Leuna-Harze. Furthermore, it is also possible to use a wide variety of epoxides containing a β-hydroxy ether group, prepared

by the reaction of (poly)epoxides with a substoichiometric amount of monofunctional nucleophiles such as carboxylic acids, phenols, thiols or secondary amines.

According to one or more embodiments, the at least one epoxy-functional polymer **EP** comprises or is composed of at least one epoxy-functional polyurethane polymer **EP5,** preferably at least one epoxy-functional polyurethane polymer of formula (V).

According to one or more embodiments, the at least one epoxy-functional polymer **EP** comprises the at least one olefin glycidyl (meth)acrylate copolymer **EP1** and/or the at least one olefin alkyl acrylate glycidyl (meth)acrylate terpolymer **EP2** and/or the at least one glycidyl (meth)acrylate grafted (co)polymer **EP3**.

Acid anhydride functional polymer **AP**

The polymer component **P** of the thermally expandable composition further comprises at least one acid anhydride-functional polymer **AP**.

Preferred acid anhydride-functional polymers **AP** have an average of more than one acid anhydride group per molecule. Furthermore, the at least one acid anhydride-functional polymer **AP** may contain either polymerized or grafted acid anhydride functionality, i.e., the acid anhydride moieties may be present as part of a polymer backbone or grafted onto a polymer as a side chain.

Suitable acid anhydride-functional polymers **AP** include maleic anhydride-functional polymers and tetrahydrophthalic anhydride-functional polymers, particularly maleic anhydride-functional polymers.

According to one or more embodiment, the at least one acid anhydride-functional polymer **AP** is a maleic anhydride-functional polymer.

Suitable maleic anhydride-functional polymers include, for example, olefin maleic anhydride copolymers, olefin alkyl (meth)acrylate maleic anhydride terpolymers, and maleic anhydride grafted (co)polymers.

According to one or more embodiments, the at least one acid anhydride-functional polymer **AP** is selected from olefin alkyl acrylate maleic anhydride terpolymer, olefin maleic anhydride copolymer, and maleic anhydride grafted (co)polymer.

Suitable olefin alkyl acrylate maleic anhydride terpolymers to be used as the at least one acid anhydride-functional polymer **AP** include, for example, terpolymers in particular random terpolymers of ethylene and alkyl (meth)acrylate, and maleic anhydride, wherein the alkyl group of the alkyl (meth)acrylate is preferably selected from the group consisting of methylene, ethylene, propylene, and butylene.

According to one or more embodiments, the at least one acid anhydride-functional polymer **AP** comprises at least one olefin alkyl acrylate maleic anhydride terpolymer **AP1,** preferably selected from the group consisting of random terpolymers of ethylene, alkyl (meth)acrylate, and maleic anhydride, wherein the alkyl group of the alkyl (meth)acrylate is preferably selected from the group consisting of methylene, ethylene propylene, and butylene, more preferably methylene, ethylene, and butylene.

According to one or more embodiments, the at least one olefin alkyl acrylate maleic anhydride terpolymer **AP1** has:

- a content of maleic anhydride of 0.5 - 10 wt.-%, preferably 1 - 7.5 wt.-%, more preferably 1 - 5 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85 - 135 °C, more preferably 90 - 125 °C.

According to one or more embodiments, the at least one acid anhydride-functional polymer **AP** is composed of the at least one olefin alkyl acrylate maleic anhydride terpolymer **AP1**, preferably selected from the group consisting of random terpolymers of ethylene, alkyl (meth)acrylate, and maleic anhydride, wherein the alkyl group of the alkyl (meth)acrylate is preferably selected from the group consisting of methylene, ethylene propylene, and butylene, more preferably methylene, ethylene, and butylene.

Suitable olefin maleic anhydride copolymers to be used as the at least one acid anhydride-functional polymer **AP** include, for example, copolymers of maleic anhydride with ethylene, propylene, or butylene.

According to one or more embodiments, the at least one acid anhydride-functional polymer **AP** comprises or is composed of at least one olefin maleic anhydride copolymer **AP2**, preferably selected from the group consisting of copolymers of ethylene, propylene, and butylene with maleic hydride, more preferably ethylene maleic anhydride copolymers.

Suitable maleic anhydride grafted (co)polymers to be used as the at least one acid anhydride-functional polymer **AP** include, for example, maleic anhydride grafted olefin alkyl (meth)acrylate copolymers, maleic anhydride grafted olefin

vinyl acetate copolymers, maleic anhydride grafted ethylene-α-olefin copolymers, maleic anhydride grafted propylene-α-olefin copolymers, maleic anhydride grafted polyethylene, maleic anhydride grafted polypropylene, and maleic anhydride grafted olefin copolymer elastomers, such as maleic anhydride grafted ethylene-propylene rubber (EPR).

According to one or more embodiments, the at least one acid anhydride-functional polymer **AP** comprises at least one maleic anhydride grafted (co)polymer **AP3**, preferably selected from the group consisting of maleic anhydride grafted olefin alkyl (meth)acrylate copolymers, maleic anhydride grafted olefin vinyl acetate copolymers, maleic anhydride grafted ethylene-a-olefin copolymers, maleic anhydride grafted propylene-α-olefin copolymers, maleic anhydride grafted polyethylene, maleic anhydride grafted polypropylene, and maleic anhydride grafted olefin copolymer elastomers, more preferably from the group consisting of maleic anhydride grafted olefin vinyl acetate copolymers, maleic anhydride grafted polyethylene, and maleic anhydride grafted polypropylene.

According to one or more embodiments, the at least one maleic anhydride grafted (co)polymer **AP3** has:

- a content of maleic anhydride of 0.1 - 10 wt.-%, preferably 0.1 - 5 wt.-%, more preferably 0.1 -3.5 wt.-%, even more preferably 0.1 -2.5 wt.-%, in particular 0.1 - 1.5 wt.-% and/or
- a melt flow index, determined according to ISO 1133 (190 °C/2.16 kg), of not more than 100 g/10 min, preferably not more than 75 g/10 min, more preferably not more than 50 g/10 min and/or
- a melting temperature ($T_m$) as determined by DSC measurements conducted according to ISO 11357-3 of at or below 150 °C, preferably at or below 135 °C, in particular in the range of 75 - 150 °C, preferably 85- 135 °C, more preferably 90 - 125 °C.

According to one or more embodiments, the at least one acid anhydride-functional polymer **AP** is composed of the at least one maleic anhydride grafted (co)polymer **AP3**, preferably selected from the group consisting of maleic anhydride grafted olefin alkyl (meth)acrylate copolymers, maleic anhydride grafted olefin vinyl acetate copolymers, maleic anhydride grafted ethylene-a-olefin copolymers, maleic anhydride grafted propylene-α-olefin copolymers, maleic anhydride grafted polyethylene, maleic anhydride grafted polypropylene, and maleic anhydride grafted olefin copolymer elastomers, more preferably from the group consisting of maleic anhydride grafted olefin vinyl acetate copolymers, maleic anhydride grafted polyethylene, and maleic anhydride grafted polypropylene.

According to one or more embodiments, the at least one acid anhydride-functional polymer **AP** comprises the at least one olefin alkyl acrylate maleic anhydride terpolymer **AP1** and/or the at least one olefin maleic anhydride copolymer **AP2** and/or the at least one maleic anhydride grafted (co)polymer **AP3.**

According to one or more embodiments, the at least one blowing agent **BA** has a maximum decomposition peak temperature measured by Differential Scanning Calorimetry (DSC) in the range of 135 - 200 °C, preferably 150 - 200 °C, more preferably 155 - 200 °C, even more preferably 160 - 200 °C. Preferably, the maximum decomposition peak measured by DSC is determined by a DSC822e differential scanning calorimeter from Mettler-Toledo by keeping the sample for 2 min at 25 °C, then heating the sample from 25°C to 280 °C at a rate of 5°C/min, then keeping the sample for 2 min at 280 °C and finally cooling the sample from 280 °C to 25 °C at a rate of 10 °C/min.

## Thermoplastic polymer TP

The polymer component **P** of the thermally expandable composition can further comprise at least one thermoplastic polymer **TP**.

Principally all thermoplastic polymers and thermoplastic elastomers (TPE) are suitable as the at least one thermoplastic polymer **TP**. It goes without saying that the at least one thermoplastic polymer **TP** is different from the at least one epoxy-functional polymer **EP** and from the at least one acid anhydride-functional polymer **AP**.

Suitable thermoplastic polymers to be used as the at least one thermoplastic polymer **TP** include, for example, styrene-butadiene copolymers, styrene-isoprene copolymers, ethylene-vinyl acetate copolymers (EVA), olefin (meth)acrylate copolymers, olefin alkyl (meth)acrylate copolymers, olefin (meth)acrylic acid copolymers, polyolefins, and halogenated polyolefins, such as polyvinyl chloride (PVC). Suitable olefin (meth)acrylate copolymers and olefin alkyl (meth)acrylate copolymers include, for example, ethylene-ethyl acrylate copolymers, ethylene-butyl acrylate copolymers, and ethylene-2-ethylhexyl acrylate copolymers.

Suitable thermoplastic polymers may contain unsaturated olefinic bonds and they can also contain functional groups other than epoxide groups or acid anhydride groups, such as halogen, nitrile, thiol, hydroxyl, or carboxyl groups. It is however preferred that the at least one thermoplastic polymer **TP** is free of functional groups, which may interfere with the curing mechanism of the thermally expandable composition. This approach offers a better controllability of the curing mechanism and secondary properties such as the adhesion properties.

According to one or more embodiments, the at least one thermoplastic polymer **TP** is a non-functionalized thermoplastic polymer, preferably selected ethylene-vinyl acetate copolymers, olefin (meth)acrylate copolymers, olefin alkyl (meth)acrylate copolymers, and olefin (meth)acrylic acid copolymers, more preferably from the group consisting

of ethylene-vinyl acetate copolymers, olefin (meth)acrylate copolymers and olefin alkyl (meth)acrylate copolymers.

According to one or more embodiments, the at least one thermoplastic polymer **TP** has:

- a melt flow index determined according to ISO 1133 (190 °C/2.16 kg) of not more than 200 g/10 min, preferably not more than 175 g/10 min, even more preferably not more than 155 g/10 min and/or
- a melting temperature ($T_m$) as determined by DSC measurements conducted according to ISO 11357-3 of at or below 125 °C, preferably at or below 110 °C, more preferably at or below 100 °C.

According to one or more embodiments, the at least one thermoplastic polymer **TP** comprises at least one first non-functionalized thermoplastic polymer **TP1** and at least one second non-functionalized thermoplastic polymer **TP2** different from the at least one first non-functionalized thermoplastic polymer **TP1**, wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers, even more preferably from the group consisting of olefin (meth)acrylate copolymers and olefin alkyl (meth)acrylate copolymers.

According to one or more embodiments, the at least one first non-functionalized thermoplastic polymer **TP1** has a melt flow index determined according to ISO 1133 (190 °C/2.16 kg) of not more than 25 g/10 min, more preferably not more than 15 g/10 min, even more preferably not more than 10 min, in particular 1 - 10 g/10 min, preferably 1 - 7.5 g/10 min and/or the at least one second non-functionalized thermoplastic polymer **TP2** has a melt flow index determined according to ISO 1133 (190 °C/2.16 kg) of at least 15 g/10 min, more preferably at least 25 g/10 min, even more preferably at least 30 g/10 min, in particular 25 - 200 g/10 min, preferably 30 - 175 g/10 min.

According to one or more embodiments, the weight ratio of the total amount of the at least one first non-functionalized thermoplastic polymer **TP1** and the at least one second non-functionalized thermoplastic polymer **TP2** is in the range of from 5:1 to 1:3, preferably from 3:1 to 1:2, more preferably from 2.5:1 to 1:1.

According to one or more embodiments, the at least one thermoplastic polymer **TP** is composed of the at least one first non-functionalized thermoplastic polymer **TP1** and the at least one second non-functionalized thermoplastic polymer **TP2**, wherein the at least one first and second non-functionalized thermoplastic polymers **TP1** and **TP2** are preferably selected from the group consisting of ethylene-vinyl acetate copolymers, olefin (meth)acrylate copolymers, olefin alkyl (meth)acrylate copolymers, and olefin (meth)acrylic acid copolymers, more preferably from the group consisting of ethylene-vinyl acetate copolymers, olefin (meth)acrylate copolymers and olefin alkyl (meth)acrylate copolymers, even more preferably from the group consisting of olefin (meth)acrylate copolymers and olefin alkyl (meth)acrylate copolymers.

According to one or more embodiments, the thermally expandable composition is substantially free of epoxy resins, in particular free of solid epoxy resins of formula (I), liquid epoxy resins of formula (II), and solid epoxy resins of formula (III). The expression "substantially free of" is understood to mean that the amount of the epoxy resins is in the thermally expandable composition is not more than 1.5 wt.-%, preferably not more than 1.0 wt.-%, more preferably not more than 0.5 wt.-%, even more preferably not more than 0.25 wt.-%, in particular not more than 0.1 wt.-%, based on the total weight of the thermally expandable composition. The thermally expandable compositions according to these embodiments are particularly suitable for use in sealing and baffling of hollow structures.

According to one or more embodiments, the thermally expandable composition comprises less than 3.5 wt.-%, preferably less than 2.5 wt.-%, more preferably less than 1.5 wt.-%, even more preferably less than 1.0 wt.-%, still more preferably less than 0.5 wt.-%, of rubber. The term "rubber" designates in the present disclosure natural, synthetic, or modified high molecular weight polymer or combination of polymers, which is capable of recovering from large deformations, i.e., has elastic properties. Typical rubbers are capable of being elongated or deformed to at least 200% of their original dimension under an externally applied force, and will substantially resume the original dimensions, sustaining only small permanent set (typically no more than about 20%), after the external force is released.

According to one or more further embodiments, the thermally expandable composition is substantially free of rubber. The expression "substantially free of" is understood to mean that the thermally expandable composition may contain only traces of rubbers, such as less than 0.25 wt.-%, preferably less than 0.1 wt.-%, more preferably less than 0.01 wt.-%, based on the total weight of the thermally expandable composition.

Apart from the essential and optional ingredients listed above, the thermally expandable composition may contain other compounds commonly used in such compositions and known to the ordinarily person skilled in the art. These include, for example, tackifying resins, fillers, colorants, dispersion aids or homogenizers, stabilizers, and the like.

The term "tackifying resin" designates in the present document resins that in general enhance the adhesion and/or tackiness of a composition. The term "tackiness" refers in the present document to the property of a substance of being sticky or adhesive by simple contact, which can be measured, for example, as a loop tack. Preferred tackifying resins are tackifying at a temperature of 25 °C. Such tackifying resins lead to good adhesion on metal substrates,

especially oiled metal substrates, both before and after foaming of the thermally expandable composition.

Suitable tackifying resins to be used in the thermally expandable composition have a relatively low average molecular weight ($M_n$), such as not more than 5'000 g/mol, in particular not more than 3'500 g/mol, preferably not more than 2'500 g/mol and a softening point, determined by a Ring and Ball method according to DIN EN 1238, of at or below 180 °C, preferably at or below 160 °C, more preferably at or below 150 °C. Suitable tackifying resins include, in particular, synthetic resins, natural resins, and chemically modified natural resins.

The term "synthetic resin" designates in the present disclosure compounds obtained from the controlled chemical reactions such as polyaddition or polycondensation between well-defined reactants that do not themselves have the characteristic of resins. Monomers that may be polymerized to synthesize the synthetic resins may include aliphatic monomer, cycloaliphatic monomer, aromatic monomer, or mixtures thereof. Suitable aliphatic monomers may include $C_4$, $C_5$, and $C_6$ paraffins, olefins, and conjugated diolefins. Examples of aliphatic monomers or cycloaliphatic monomers include butadiene, isobutylene, 1,3-pentadiene, 1,4-pentadiene, cyclopentane, 1-pentene, 2-pentene, 2-methyl-1-pentene, 2-methyl-2-butene, 2-methyl-2-pentene, isoprene, cyclohexane, 1- 3-hexadiene, 1-4-hexadiene, cyclopentadiene, and dicyclopentadiene. Examples of aromatic monomer include Cs, $C_9$, and $C_{10}$ aromatic monomers. Typical aromatic monomers include, styrene, alphamethyl styrene, vinyl toluene, methoxy styrene, tertiary butyl styrene, chlorostyrene, coumarone, and indene monomers including indene, and methyl indene, and combinations thereof.

Suitable synthetic resins include, for example, hydrocarbon resins, coumarone-indene resins, polyindene resins, polystyrene resins, vinyl toluene-alphamethyl styrene copolymer resins, and alphamethyl styrene resins.

The term "hydrocarbon resin" designates in the present disclosure synthetic resins made by polymerizing mixtures of unsaturated monomers obtained from petroleum based feedstocks, such as by-products of cracking of natural gas liquids, gas oil, or petroleum naphthas. These types of hydrocarbon resins are also known as "petroleum resins" or as "petroleum hydrocarbon resins". The hydrocarbon resins include also pure monomer aromatic resins, which are prepared by polymerizing aromatic monomer feedstocks that have been purified to eliminate color causing contaminants and to precisely control the composition of the product.

Suitable hydrocarbon resins are commercially available, for example, under the trade name of Wingtack®, Wingtack® Plus, Wingtack® Extra, and Wingtack® STS (all from Cray Valley); under the trade name of Escorez® 1000 series, Escorez® 2000 series, and Escorez® 5000 series (all from ExxonMobil Chemical); under the trade name of Novares® T series, Novares® TT series, Novares® TD series, Novares® TL series, Novares® TN series, Novares® TK series, and Novares® TV series (all from RÜTGERS Novares GmbH); and under the trade name of Kristalex®, Plastolyn®, Piccotex®, Piccolastic® and Endex® (all from Eastman Chemicals).

Tackifying resins, if used, are preferably included in the thermally expandable composition in an amount of 2 - 20 wt.-%, preferably 4 - 15 wt.-%, more preferably 5 - 10 wt.-%, based on the total weight of the thermally expandable composition.

Suitable fillers to be used in the thermally expandable composition include, for example, ground or precipitated calcium carbonate, lime, calcium-magnesium carbonate, talcum, gypsum, graphite, barite, pyrogenic or precipitated silica, silicates, mica, wollastonite, kaolin, feldspar, chlorite, bentonite, montmorillonite, dolomite, quartz, cristobalite, calcium oxide, aluminum hydroxide, magnesium oxide, hollow ceramic spheres, hollow glass spheres, hollow organic spheres, glass spheres, functionalized alumoxanes, and carbon black. Suitable fillers include both organically coated and also uncoated commercially available forms of the fillers included in the above presented list. Particularly suitable fillers include ground or precipitated calcium carbonate, calcium-magnesium carbonate, talcum, gypsum, graphite, barite, pyrogenic or precipitated silica, silicates, mica, wollastonite, carbon black, and mixtures thereof.

Fillers, if used, are preferably incorporated in the thermally expandable compositions in an amount of 1 - 20 wt.-%, more preferably 1 - 15 wt.-%, even more preferably 2.5 - 15 wt.-%, based on the total weight of the thermally expandable composition.

Colorants or dyes, such as pigments, for example on the basis of carbon black, may also be included in the thermally expandable composition. Their amount is preferably between 0.1 - 1 wt.-%, based on the total weight of the thermally expandable composition.

Preferably, the thermally expandable composition after curing has a volume increase compared to the uncured composition of at least 150 %, preferably at least 250 %, more preferably at least 350 %, whereby the volume increase is determined using the DIN EN ISO 1183 method of density measurement (Archimedes principle) in deionised water in combination with sample mass determined by a precision balance.

According to one or more embodiments, the thermally expandable composition after curing has a volume increase compared to the uncured composition in the range of 150 - 3000 %, preferably 200 - 2500 %, more preferably 250 - 2000 %, even more preferably 300 - 1750 %.

The thermally expandable compositions according to the present invention can be produced by mixing the constituents in any suitable mixing apparatus, for example in a dispersion mixer, planetary mixer, such as planetary roller, extruder such as a twin screw extruder, kneader, such as a Buss, Banbury, or roller kneader, or a two-roll mill.

It may be advantageous to heat the constituents before or during mixing, either by applying external heat

sources or by friction generated by the mixing process itself, in order to facilitate processing of the components into a homogeneously mixed mixture by decreasing viscosities and/or melting of individual components. However, care has to be taken, for example by temperature monitoring and using cooling devices where appropriate, not to exceed the activation temperatures of the at least one blowing agent **BA.** The thus obtained thermally expandable composition is preferably essentially solid at normal room temperature (23 °C), meaning that it does not visibly deform at this temperature just by means of gravity during a period of at least 24 h.

After mixing of the constituents of the thermally expandable composition, the thus obtained composition may be shaped into its desired form by, for example, extruding, blow-molding, pelleting, injection molding, compression molding, punching, or stamping or using any other suitable process.

The thermally expandable composition of the present invention may be produced in a substantially one-step process, involving the addition of all constituents in a series and/or simultaneously. However, it may also be advantageous to provide the thermally expandable composition as a two-part system, or even multipart system. In these cases, the constituents of the thermally expandable composition are provided in separate air- and moisture impermeable packages or compartments of a single package and they are mixed with each other and optionally with other compounds at the time of use or immediately before the time of use of the thermally expandable composition. Such an approach may, for example, be taken to increase shelf life of the thermally expandable composition in places with demanding conditions (such as extraordinarily high temperatures), to optimize storage room demand and transport weight, or to enable providing tailor-made, modular compositions for different applications.

The thermally expandable compositions according to the present invention are storage stable at normal storage conditions. The term "storage stable" refers in the present disclosure to materials, which can be stored at specified storage conditions for long periods of time, such as at least one month, in particular at least 3 months, without any significant changes in the application related properties of the material. The "typical storage conditions" refer here to temperatures of not more than 60°C, in particular not more than 50°C.

The expansion of the thermally expandable composition of the present invention is triggered by heating. This means that the thermally expandable composition is activated by a heating step that exceeds its activation temperature and exhibits a duration long enough for the decomposition of the at least one blowing agent **BA** (resulting in gas formation) to proceed until the expandable material has expanded and cured into its intended final (sufficiently expanded and stable) state. The optimal temperature and duration of the heating step (dwell time) depends on the embodiment of the thermally expandable composition, particularly on the composition of the at least one blowing agent **BA** contained in the thermally expandable composition. The thermally expandable composition may have an activation temperature in the range of 120 - 250 °C, preferably 140 - 220 °C, and a dwell time of the heating step in the range of 5 - 90 min, preferably 10 -60 min.

The preferences given above for the at least one epoxy-functional polymer **EP**, the at least one acid anhydride functional polymer **AP**, the at least one thermoplastic polymer **TP**, and the at least one blowing agent **BA** apply equally for all subjects of the present invention unless stated otherwise.

Another subject of the present invention is a baffle and/or a reinforcement element for hollow structures comprising or essentially consisting of the thermally expandable composition of the present invention.

Such elements are used to seal, baffle, and/or reinforce hollow structures, for example, a cavity in a hollow structural part of an automobile. Hollow parts in cars may include body components (for example panels), frame components (for example, hydroformed tubes), pillar structures (for example, A, B, C, or D-pillars), bumpers, roofs, or the like.

According to one or more embodiments, the baffle and/or reinforcement element for hollow structures essentially consists of the thermally expandable composition of the present invention. In these embodiments, it is advantageous to provide the element with such a shape that it can be easily fitted into and attached to the walls of the hollow structure to be baffled and/or reinforced. Such shaped elements can be provided from the thermally expandable composition, for example, by injection molding, punching or stamping, or extrusion through a shape template.

According to one or more further embodiments, the baffle and/or reinforcement element further comprises a carrier on which the thermally expansible composition is deposited or attached. Such a design may be more cost-efficient and it may facilitate fixation of the baffle and/or reinforcement element on the walls of the structure to be baffled and/or reinforced, for example by incorporation of pins, bolts, or hooks on the carrier element. Furthermore, with a suitable design of the carrier element, the mechanical performance and stability of the baffle and/or reinforcement element can be improved.

The carrier of the baffle and/or reinforcement element, if used, may consist of any material that can be processed into a shape. Preferred materials for the carrier include polymeric materials, such as a plastic, elastomers, thermoplastics, blends thereof, and the like. Preferred thermoplastic materials include, without limitation, polymers such as polyurethanes, polyamides, polyesters, polyolefins, polysulfones, polyethylene terephthalates (PET), polyvinylchlorides (PVC), chlorinated polyolefins, and the like. Especially preferred are high-temperature stable polymers such as poly(phenyl ethers), polysulfones, polyethersulfones, polyamides, in particular polyamide 6, polyamide 6,6, polyamide 11, polyamide 12, and mixtures thereof. Other suitable materials for the carrier include metals, especially aluminum or steel, or naturally grown, organic materials, such as wood or other (pressed) fibrous materials. Also glassy or ceramic materials can be used. It

is also possible to use any combination of such materials. It is also contemplated that such materials can be filled, for example, with fibers, minerals, clays, silicates, carbonates, combinations thereof, or the like, or be foamed.

The carrier element can further exhibit any shape or geometry. It can also consist of several, not directly connected parts. For example, it can be massive, hollow, or foamed, or it can exhibit a grid-like structure. The surface of the carrier element can typically be smooth, rough, or structured, according to the intended use of the baffle and/or reinforcement element.

Another subject of the present invention is a process for manufacturing a baffle and/or reinforcement element of the present invention, wherein the thermally expandable composition is injection-molded onto a carrier or co-extruded with a carrier.

The details of the manufacturing process of a baffle and/or reinforcement element of the present invention depends largely on the material of the carrier. If the material of the carrier can be (injection-) molded or extruded, the baffle and/or reinforcement element can be produced in a two-step injection-molding process or by co-extruding the carrier and the thermally expandable composition.

In case of a two-step injection molding process, the first step comprises injecting the material of the carrier into a mold. After solidification, the cavity of the injection molding tool is enlarged or adjusted, or the injection-molded piece is transferred into another tool followed by a second step comprising injecting of the thermally expandable composition.

In case the carrier cannot be shaped by injection-molding or extrusion, for example, because it is composed of a metal or an alloy, the carrier may be first manufactured by a suitable process and then introduced into an injection-molding tool. The thermally expandable composition may then be injection-molded into the tool where the carrier was previously placed. Another possibility is to extrude the thermally expandable composition onto a pre-fabricated carrier element. Of course there is also the possibility of manufacturing the carrier and an element of the thermally expandable composition individually by any suitable process, and then attaching the element of the thermally expandable composition to the carrier by any suitable means, such as chemically or physically, for example by gluing or the like, or mechanically, for example, by bolting, screwing, or the like.

Another subject of the present invention is the use of the baffle and/or reinforcement element of the present invention for sealing, baffling, or reinforcing of a cavity or a hollow structure of a land-, water-, or air-vehicle, preferably an automotive vehicle, and/or a cavity of a building such that the transmission of noise, vibrations, humidity, and/or heat is reduced, and/or the structure surrounding said cavity or hollow structure is mechanically strengthened.

Another subject of the present invention is a method for sealing, baffling and/or reinforcing a cavity or a hollow structure, wherein an element comprising a thermally expandable composition according the present invention is introduced into said cavity or hollow structure and subsequently expanded by heat and/or by UV-treatment such that said cavity or hollow structure is at least partially filled by the expanded composition.

The temperature of the thermal expansion step is preferably 140 - 250 °C, more preferably of 150 - 220 °C, even more preferably 150 - 200 °C. Preferred duration of the thermal expansion step, i.e. preferred baking time of the thermally expandable composition, is 5 - 90 min, more preferably 10 - 60 min, even more preferably 10 - 30 min.

Regarding the thermal activation of the element comprising the thermally expandable composition when used in manufacturing of automotive vehicles, it is advantageous to couple the thermal activation with another process step involving heat treatment. An example of such a process step is the electrocoating (cathodic dip painting/coating) of the chassis of a car body.

Still another subject of the present inventions is use of sodium bicarbonate in a thermally expandable material as a blowing agent to reduce odor of the expanded material, wherein the thermally expandable material comprises a polymer component **P** and at least 2.5 wt.-%, preferably at least 5 wt.-%, based on the total weight of the material, of sodium bicarbonate.

The term "expanded material" refers here to the thermally expandable material after the foaming process, i.e., after activation of the blowing agent. Odor of the expanded material can be quantified as a sensory impression of smell of the expanded material measured according to VDA270 standard.

According to one or more embodiments, the expanded material has a sensory impression of smell measured according to the VDA270 standard of not more than 4.0, preferably not more than 3.5.

According to one or more embodiments, the thermally expandable material comprises 5 - 25 wt.-%, preferably 10 - 20 wt.-%, more preferably 12.5 - 20 wt.-%, based on the total weight of the material, of sodium bicarbonate.

Preferably, the sodium bicarbonate has a median particle size $d_{50}$ of not more than 150 μm, preferably not more than 100 μm, more preferably not more than 85 μm, even more preferably not more than 75 μm.

According to one or more embodiments, the sodium bicarbonate has a median particle size $d_{50}$ of 1 - 150 μm, preferably 1.5 - 100 μm, more preferably 2.5 - 85 μm, even more preferably 2.5 - 75 μm. Preferably, the sodium bicarbonate has a median particle size $d_{50}$ of 2.5 - 100 μm, more preferably 7.5 - 75 μm, even more preferably 10 - 50 μm, still more preferably 12.5 - 40 μm. Especially preferably, the sodium bicarbonate has a median particle size $d_{50}$ of 10 - 45 μm, mor preferably 15 - 40 μm, still more preferably 17.5 - 35 μm.

According to one or more embodiments, the thermally expandable material is essentially free of organic peroxides, preferably essentially free of peroxides. The expression "essentially free of peroxides" is understood to mean that the thermally expandable composition may contain only traces of peroxides, such as less than 0.25 wt.-%, preferably less than 0.1 wt.-%, more preferably less than 0.01 wt.-%, based on the total weight of the thermally expandable material.

According to one or more further embodiments, the thermally expandable material is essentially free of free-radical cross-linkers. The expression "essentially free of free-radical cross-linkers" is understood to mean that the amount of such substances, which are able to cross-link polymers by free-radical curing mechanism is preferably less than 0.25 wt.-%, more preferably less than 0.1 wt.-%, even more preferably less than 0.05 wt.-%, based on the total weight of the thermally expandable material.

It may further be preferred that the thermally expandable material is essentially free of ADCA (azodicarbonamide) and OBSH (4,4'-oxybis(benzenesulfonic acid hydrazide)), preferably essentially free of exothermic blowing agents, in particular ADCA, OBSH, DNPT (dinitroso pentamethylene tetramine), PTSS (p-toluenesulfonyl semicarbazide), BSH (benzene-4-sulfonyl hydrazide), TSH (4-toluenesulfonyl hydrazide), and 5-PT (5-phenyltetrazole). The expression "essentially free of" is understood to mean that the thermally expandable material may contain only traces of the above listed compounds, such as less than 0.25 wt.-%, preferably less than 0.1 wt.-%, more preferably less than 0.05 wt.-%, based on the total weight of the thermally expandable material.

The polymer component **P** preferably comprises at least one thermoplastic polymer and/or at least one rubber.

Suitable thermoplastic polymer for use in the polymer component **P** include, for example, polyolefins, halogenated polyolefins, styrene block copolymers, ethylene-vinyl acetate copolymers, olefin (meth)acrylate copolymers, olefin alkyl (meth)acrylate copolymers, olefin (meth)acrylic acid copolymers, and polyvinyl chloride.

Suitable rubbers for use in the polymer component **P** include, for example, styrene-butadiene rubber (SBR), ethylene propylene diene monomer rubber (EPDM), polyisoprene, polybutadiene, natural rubber, polychloroprene rubber, ethylene-propylene rubber (EPR), nitrile rubbers, and acrylic rubbers.

Preferably, the thermally expandable material comprises at least 35 wt.-%, more preferably at least 45 wt.-%, even more preferably at least 55 wt.-%, still more preferably at least 60 wt.-%, most preferably at least 65 wt.-%, based on the total weight of the thermally expandable material, of the polymer component **P**.

According to one or more preferred embodiments, the polymer component **P** comprises at least one epoxy-functional polymer **EP**, at least one acid anhydride-functional polymer **AP**, and optionally at least one thermoplastic polymer **TP**.

Preferred embodiments of the epoxy-functional polymer **EP**, acid anhydride-functional polymer **AP**, and thermoplastic polymer **TP** have already been discussed above in the context of the thermally expandable composition of the present invention.

According to one or more embodiments, the sum of the weights of the at least one polymer **EP**, **AP**, and **TP** makes up at least 75 wt.-%, preferably at least 85 wt.-%, more preferably at least 95 wt.-%, of the total weight of the polymer component **P**.

According to one or more embodiments, the molar ratio of the total amount of epoxy groups contained in the at least one polymer **EP** to the total amount of acid anhydride groups contained in the at least one polymer **AP** in the thermally expandable material is in the range of from 1.5:1 to 1:1.5, preferably from 1.2:1 to 1:1.2.

In a preferred embodiment, the thermally expandable material is composed of the thermally expandable composition of the present invention.

## Examples

The followings chemicals shown in Table 1 were used in formulating the thermally expandable compositions.

Table 1

| | |
|---|---|
| *Polymer **TP1*** | Ethylene vinyl acetate copolymer, vinyl acetate content 18 %, MFI (190 °C/2.16 kg) of 150 g/10 min (ISO 1133) |
| *Polymer **TP2*** | Ethylene vinyl acetate copolymer, vinyl acetate content 28 %, MFI (190 °C/2.16 kg) of 6-8g/10 min (ISO 1133) |
| *Polymer **EP1*** | Random copolymer of ethylene and glycidyl methacrylate , 5-10 wt.-% of glycidyl methacrylate, MFI (190 °C/2.16 kg) of 5 g/10 min (ISO 1133) |
| *Polymer **EP2*** | Random terpolymer of ethylene, acrylic ester, and glycidyl methacrylate, 6-12 wt.-% of glycidyl methacrylate, MFI (190 °C/2.16 kg) of 5-10 g/10 min (ISO 1133) |
| *Polymer **AP*** | Random terpolymer of ethylene, acrylic ester, and maleic anhydride, 5-10 wt.-% of butyl acrylate, 1.5-5 wt.-% of maleic anhydride, Melt Index (190 °C/2.16 kg) of 3.5-10 g/10 min (ISO 1133) |

(continued)

| | |
|---|---|
| *Tackifier* | Aromatically modified C5 hydrocarbon resin, softening point 95-100 °C |
| *Activator* | Dicyandiamide |
| *Filler* | $CaCO_3$, $d_{50}$ particle size 10 μm |
| *Additive* | Polyethylene wax, DSC peak temperature 110-120 °C |
| *BA1* | Aminoguanidinium oxalate, 99 wt.-% purity, particle size 250 mesh (63 μm) |
| *BA2* | $NaHCO_3$ Tracel NC 135, $d_{50}$ particle size 29 μm |
| *BA3* | $NaHCO_3$ Luvobatch PW BA 1141, $d_{50}$ particle size 8 μm |
| *BA4* | $NaHCO_3$ Luvobatch NUK 1143, $d_{50}$ particle size 16 μm |
| *BA5* | $NaHCO_3$ ACS Reagent, $d_{50}$ particle size 65 μm |

Preparation of the thermally expandable compositions

All inventive and reference example compositions in this document were produced on standard production equipment suitable to compound thermoplastics with temperature control, i.e., twin screw extruder, Buss kneader or Banbury mixer. Polymers were mixed until homogeneous at a temperature 100 - 110 °C after which the system was cooled below activation of heat reactive raw materials (< 80 °C). Heat reactive raw materials were then mixed into the system until homogeneous.

The obtained material was subsequently hot-pressed (95 °C, 30 bar) into sheets having a thickness of 4 mm, which were used in tests for volume expansion, water absorption, and odor rating.

Volume expansion

Samples having dimensions of 25 × 25 × 4 mm were cut from the sheets and expanded in an oven at three different temperatures (at 150 °C for 20
mins, at 170 °C for 30 mins, and at 200 °C for 30 mins). The expanded samples were taken out from the oven and cooled down to room temperature.

Expansion rates of the samples were determined by means of Archimedes' principle:

$$Expansion\ rate\ (\%) = \frac{(V_e - V_0)}{V_0} \cdot 100\ \% = \frac{\left(\frac{m_{H2O}}{\rho_{H2O}}\right) - \frac{m_p}{\rho_p}}{\frac{m_p}{\rho_p}} \cdot 100\ \%$$

wherein

$V_e$ is volume of the sample after expansion [$cm^3$]
$V_0$ is volume of the sample before expansion [$cm^3$]
$m_p$ is mass of the expanded sample in the air [g]
$m_{H2O}$ is mass of the expanded sample in water [g]
$\rho_{H2O}$ is density of water [g/cm3] (= 1.00 g/$cm^3$ at 20-23 °C)
$\rho_p$ is density of the sample [g/$cm^3$]

Odor test

The samples were expanded at 170 °C for 30 mins one day before the odor test Once the samples were cooled down, they were cut into a size of 40 $cm^3$ and stored at room temperature.

Before the odor test, the samples were placed into 1-litre glass containers having aluminum lids. The containers had been treated in in an oven at 100°C overnight to make sure they were free from any odors. After the samples were placed in the containers, they were sealed and stored in the oven at 80 °C for 2 hours. Once the containers were taken out from the oven, they were cooled down for 7 minutes at ca. 50 °C.

The odor test was performed according to the VDA270 "Determination of the odor behavior of automotive

interior materials" in line with the VDA "Verband der Automobilindustrie" February 2017. In the odor test, the testers assess the odor of samples according to the following scale:

Grade 1 imperceptible
Grade 2 perceptible but not disturbing
Grade 3 clearly perceptible but not disturbing
Grade 4 disturbing
Grade 5 strongly disturbing
Grade 6 unbearable

Four testers were allowed to smell the same container and the values for each sample presented in Table 2 have been calculated as average of individual evaluations. The order of the testers smelling the containers was kept the same for all samples.

Table 2

| **Composition [pbw]** | **Ref-1** | **Ex-1** | **Ex-2** | **Ex-3** | **Ex-4** |
|---|---|---|---|---|---|
| Polymer TP1 | 25.70 | 25.70 | 25.70 | 25.70 | 25.26 |
| Polymer TP2 | 13.54 | 13.54 | 13.54 | 13.54 | 13.31 |
| Polymer EP1 | 10.47 | 10.47 | 10.47 | 10.47 | 10.29 |
| Polymer EP2 | 8.49 | 8.49 | 8.49 | 8.49 | 8.34 |
| Polymer AP | 8.49 | 8.49 | 8.49 | 8.49 | 8.34 |
| Tackifier | 11.75 | 11.75 | 11.75 | 11.75 | 11.55 |
| Activator | 0.44 | 0.44 | 0.44 | 0.44 | 0.43 |
| Filler | 4.61 | 4.61 | 4.61 | 4.61 | 4.53 |
| Additive | 3.48 | 3.48 | 3.48 | 3.48 | 3.42 |
| BA1 | 13.05 | | | | |
| BA2 | | 13.05 | | | |
| BA3 | | | 13.05 | | |
| BA4 | | | | 13.05 | |
| BA5 | | | | | 12.83 |
| **Total** | 100.0 | 100.0 | 100.0 | 100.0 | 98.3 |
| Expansion @170 °C, 30 min [%] | 802 | 769 | 404 | 736 | 798 |
| Expansion @200 °C, 30 min [%] | 1013 | 802 | 378 | 696 | 733 |
| VDA270, rating | 4.8 | 1.3 | 3.3 | 2.8 | 3.0 |

## Claims

**1.** A thermally expandable composition comprising:

a) A polymer component **P** comprising:

a1) At least one epoxy-functional polymer **EP**,
a2) At least one acid anhydride-functional polymer **AP**, and
a3) Optionally at least one thermoplastic polymer **TP**, and

b) At least one blowing agent **BA** comprising sodium bicarbonate,

wherein the thermally expandable composition comprises at least 2.5 wt.-%, preferably at least 5 wt.-%, based on

the total weight of the composition, of sodium bicarbonate.

2. The thermally expandable composition according to claim 1 comprising 5-30 wt.-%, preferably 10 - 20 wt.-%, based on the total weight of the composition, of sodium bicarbonate.

3. The thermally expandable composition according to claim 1 or 2, wherein the sodium bicarbonate has a median particle size $d_{50}$ of 1.5 - 100 $\mu$m, preferably 7.5 - 75 $\mu$m, more preferably 10 - 50 $\mu$m.

4. The thermally expandable composition according to any one of previous claims, wherein the sodium bicarbonate has a median particle size $d_{50}$ of 10 - 45 $\mu$m, preferably 15 - 40 $\mu$m, more preferably 17.5 - 35 $\mu$m.

5. The thermally expandable composition according to any one of previous claims, wherein the composition is essentially free of organic peroxides, preferably essentially free of peroxides.

6. The thermally expandable composition according to any one of previous claims, wherein the composition is essentially free of ADCA (azodicarbonamide) and OBSH (4,4'-oxybis(benzenesulfonic acid hydrazide)).

7. The thermally expandable composition according to any one of previous claims comprising at least 45 wt.-%, preferably at least 55 wt.-%, based on the total weight of the thermally expandable composition, of the polymer component **P**.

8. The thermally expandable composition according to any one of previous claims, wherein the sum of the weights of the at least one polymer **EP**, **AP**, and **TP** makes up at least 75 wt.-%, preferably at least 95 wt.-%, of the total weight of the polymer component **P**.

9. The thermally expandable composition according to any one of previous claims, wherein the at least one acid anhydride-functional polymer **AP** is a maleic anhydride-functional polymer.

10. The thermally expandable composition according to any one of previous claims, wherein the at least one polymer **EP** is selected from olefin glycidyl (meth)acrylate copolymer, olefin alkyl acrylate glycidyl (meth)acrylate terpolymer, and glycidyl (meth)acrylate grafted (co)polymer and/or the at least one polymer **AP** is selected from olefin alkyl acrylate maleic anhydride terpolymer, olefin maleic anhydride copolymer, and maleic anhydride grafted (co)polymer.

11. The thermally expandable composition according to any of previous claims, wherein the molar ratio of the total amount of epoxy groups contained in the at least one polymer **EP** to the total amount of acid anhydride groups contained in the at least one polymer **AP** in the thermally expandable composition is in the range of from 3:1 to 1:3, preferably from 2:1 to 1: 2.

12. Baffle and/or a reinforcement element for hollow structures comprising a thermally expandable composition according to any one of claims 1-11.

13. Method for sealing, baffling and/or reinforcing a cavity or hollow structure, wherein an element comprising a thermally expandable composition according to any of claims 1-11 is introduced into said cavity or hollow structure and subsequently expanded by heat such that said cavity or hollow structure is at least partially filled by the expanded composition.

14. Use of sodium bicarbonate in a thermally expandable material as a blowing agent to reduce odor of the expanded material, wherein the thermally expandable material comprises a polymer component **P** and at least 2.5 wt.-%, preferably at least 5 wt.-%, of sodium bicarbonate.

15. Use according to claim 14, wherein the thermally expandable material comprises 5-25 wt.-%, preferably 10 - 20 wt.-%, of sodium bicarbonate.

16. Use according to claim 14 or 15, wherein the sodium bicarbonate has a median particle size $d_{50}$ of 1.5 - 100 $\mu$m, preferably 7.5 - 75 $\mu$m, more preferably 10 - 50 $\mu$m.

17. Use according to any one of claims 14-16, wherein the sodium bicarbonate has a median particle size $d_{50}$ of 10 - 45 $\mu$m, preferably 15 - 40 $\mu$m, more preferably 17.5 - 35 $\mu$m.

**18.** Use according to any one of claims 14-17, wherein the thermally expandable material comprises at least 45 wt.-%, preferably at least 55 wt.-%, based on the total weight of the material, of the polymer component **P**, preferably comprising at least one thermoplastic polymer and/or at least one rubber.

**19.** Use according to any one of claims 14-18, wherein the polymer component **P** comprises at least one epoxy-functional polymer **EP**, at least one acid anhydride-functional polymer **AP**, and optionally at least one thermoplastic polymer **TP**.

**20.** Use according to any one of claims 14-19 wherein the thermally expandable material is composed of the thermally expandable composition according to any one of claims 1-11.

Europäisches Patentamt
European Patent Office
Office européen des brevets

# EUROPEAN SEARCH REPORT

Application Number
EP 23 19 6579

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 107 163 477 A (HEFEI ORINKO NEW MAT CO LTD) 15 September 2017 (2017-09-15)<br>* claim 1 *<br>* paragraph [0060] *<br>* example 4 *<br>----- | 14,18 | INV.<br>C08L23/08 |
| X<br><br>Y | CN 110 105 614 A (JINJIANG LIYOU FOOTWEAR IND CO LTD) 9 August 2019 (2019-08-09)<br>* paragraph [0017] - paragraph [0018] *<br>----- | 14,15,18<br><br>1-20 | |
| Y | US 2009/239962 A1 (DOBASHI MASAAKI [JP]) 24 September 2009 (2009-09-24)<br>* claims 1-2,14 *<br>* example 3; table 1 *<br>* paragraph [0028] *<br>* paragraph [0031] - paragraph [0032] *<br>* paragraph [0039] *<br>* paragraph [0037] *<br>----- | 1-13 | |
| Y | US 2017/002164 A1 (KOHLSTRUNG RAINER [DE] ET AL) 5 January 2017 (2017-01-05)<br>* example 1B; table 2 *<br>* paragraph [0028] *<br>----- | 13-20 | TECHNICAL FIELDS SEARCHED (IPC)<br>C08K<br>C08F<br>C08L |
| Y | US 2018/223065 A1 (WOLSCHLEGER LESLIE MICHELE [US] ET AL) 9 August 2018 (2018-08-09)<br>* paragraph [0003] - paragraph [0005] *<br>* paragraph [0029] *<br>----- | 3,4,16,17 | |

The present search report has been drawn up for all claims

1

| Place of search | Date of completion of the search | Examiner |
|---|---|---|
| The Hague | 19 December 2023 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 23 19 6579

This annex lists the patent family members relating to the patent documents cited in the above-mentioned European search report. The members are as contained in the European Patent Office EDP file on
The European Patent Office is in no way liable for these particulars which are merely given for the purpose of information.

19-12-2023

| Patent document cited in search report | | Publication date | Patent family member(s) | | | Publication date |
|---|---|---|---|---|---|---|
| CN 107163477 | A | 15-09-2017 | NONE | | | |
| CN 110105614 | A | 09-08-2019 | NONE | | | |
| US 2009239962 | A1 | 24-09-2009 | AT | E497986 | T1 | 15-02-2011 |
| | | | CN | 101535394 | A | 16-09-2009 |
| | | | EP | 2064281 | A1 | 03-06-2009 |
| | | | JP | 5342444 | B2 | 13-11-2013 |
| | | | JP | 2010504383 | A | 12-02-2010 |
| | | | PL | 2064281 | T3 | 29-07-2011 |
| | | | US | 2009239962 | A1 | 24-09-2009 |
| | | | WO | 2008034755 | A1 | 27-03-2008 |
| US 2017002164 | A1 | 05-01-2017 | CA | 2943009 | A1 | 24-09-2015 |
| | | | CN | 106133039 | A | 16-11-2016 |
| | | | EP | 3119836 | A1 | 25-01-2017 |
| | | | JP | 6626082 | B2 | 25-12-2019 |
| | | | JP | 2017510695 | A | 13-04-2017 |
| | | | KR | 20160135816 | A | 28-11-2016 |
| | | | US | 2017002164 | A1 | 05-01-2017 |
| | | | WO | 2015140282 | A1 | 24-09-2015 |
| US 2018223065 | A1 | 09-08-2018 | CN | 107922661 | A | 17-04-2018 |
| | | | EP | 3344689 | A1 | 11-07-2018 |
| | | | JP | 7007260 | B2 | 24-01-2022 |
| | | | JP | 2018527440 | A | 20-09-2018 |
| | | | US | 2018223065 | A1 | 09-08-2018 |
| | | | WO | 2017036624 | A1 | 09-03-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- DE 102011080223 A1